# EUROPÄISCHE PATENTSCHRIFT

(11) **EP 1 906 203 B1**
(45) Veröffentlichungstag und Bekanntmachung des Hinweises auf die Patenterteilung: **26.06.2013**
(21) Anmeldenummer: 07018033.6
(22) Anmeldetag: 14.09.2007
(51) Int. Cl.: G01S 7/493, G01S 17/93, G01S 7/491, G01S 17/36, G01S 7/48

(54) **Verfahren und System zur optischen Abstandsmessung zwischen zumindest zwei Objekten**
Method and system for optical distance measurement between at least two objects
Procédé et système destinés à la mesure de la distance optique entre au moins deux objets

(30) Priorität: 29.09.2006 DE 102006046177
(43) Veröffentlichungstag der Anmeldung: 02.04.2008
(73) Patentinhaber: AUDI AG, 85045 Ingolstadt (DE); IFM ELECTRONIC GMBH, 45128 Essen (DE); PMDTechnologies GmbH, 57076 Siegen (DE)
(72) Erfinder: Riedel, Helmut Dr., 86697 Oberhausen (DE); Buxbaum, Bernd Dr., 57072 Siegen (DE); Massanell, Javier, 88677 Markdorf (DE); Hess, Holger, 57076 Siegen (DE)
(74) Vertreter: Thielmann, Frank

(56) Entgegenhaltungen:
- WO-A-2004/027359

## Beschreibung

Die Erfindung betrifft ein Verfahren zur optischen Abstandsmessung zwischen zumindest zwei Objekten, bei dem durch eine Vorrichtung in einem ersten Objekt eine Anzahl n > 1 von ersten optischen Sendesignalen ausgesendet wird, und am zweiten Objekt reflektierte und von der Vorrichtung im ersten Objekt empfangene erste optische Reflexionssignale sowie erste optische Sendesignale für eine erste Abstandsmessung ausgewertet werden. Die Erfindung betrifft auch ein System, insbesondere ein PMD (Photonic Mixer Devices)-System, zur optischen Abstandsmessung zwischen zumindest zwei Objekten.

Für zukünftige Fahrzeuge befinden sich derzeit verschiedene optische Abstandssensoren in der Entwicklung. Die Sensoren sind für Anwendungen wie beispielsweise Pre-Crash Erkennung, ACC (Adaptive Cruise Control) oder Einparkhilfe vorgesehen. In den meisten Fällen wird zur Entfernungsmessung das Laufzeitprinzip (Time of Flight) genutzt.

In jüngster Zeit sind neue Bauelemente zur optischen Entfernungsmessung entwickelt worden, die als elektrooptische Mischer arbeiten. Diese Bauelemente sind beispielsweise unter der Bezeichnung Photonic Mixer Devices (PMD) oder auch als "Quantum Efficiency Modulators" bekannt. Bei diesen Bauelementen erfolgt die Entfernungsmessung mithilfe eines Phasenvergleichsverfahrens. In der Regel werden dabei amplitudenmodulierte Lichtsignale in die beobachtete Szene emittiert. Die reflektierten Signale unterscheiden sich infolge ihrer zurückgelegten Wegstrecke in der Phasenlage. Im Detektorelement, dem elektrooptischen Mischer, werden Sendesignale und Empfangssignale gemischt. Das Ergebnis der Mischung liefert nach einer weiteren Signalauswertung über die Rekonstruktion der Korrelationsfunktion die Entfernungswerte der beobachteten Objekte.

Für die Rekonstruktion der Korrelationsfunktion und damit zur Entfernungsmessung werden mehrere Belichtungsschritte benötigt. Bei jedem Belichtungsschritt wird entweder die Phase des vom optischen Sender ausgesandten optischen Sendesignals oder die Phase des zur Signalmischung im optischen Empfänger benötigten elektrischen Modulationssignals verändert. Typischerweise werden vier oder acht unterschiedliche Phasen verwendet, die sich um jeweils 90° bzw. 45° unterscheiden.

Nach der Aufnahme von jeweils vier bzw. acht Messwerten wird die Entfernung aus diesen Stützwerten mit einem geeigneten Algorithmus berechnet. Die mögliche Bildwiederholrate des Sensorelements ist durch die erforderlichen Belichtungszeiten sowie durch die Anzahl der benötigten Belichtungsschritte limitiert.

Aus der DE 198 21 974 A1 ist eine Vorrichtung und ein Verfahren zur Erfassung von Phase und Amplitude elektromagnetischer Wellen bekannt. Als Ausführungsform wird ein PMD beschrieben, das eine zeitgleiche Aufnahme der einzelnen Phasenwerte ermöglicht. Dies wird als so genanntes 4-Quadranten PMD bezeichnet. Diese bekannte Vorrichtung erfordert eine vergleichsweise große Pixelfläche des Sensorelements, ermöglicht jedoch eine begrenzte Erhöhung der Bildwiederholrate.

Aus der WO 2004/027359 ist ein Verfahren und eine Vorrichtung zur Ermittlung eines Pixel-Grauwertbildes bekannt, wobei diesbezüglich ein PMD-System verwendet werden kann. Dabei wird ein sendeseitig ausgesandtes und an einem aufzunehmenden Objekt reflektiertes erstes Modulationssignal mit einem zweiten Modulationssignal korreliert und empfangsseitig anhand von mindestens zwei jeweils zum empfangenen ersten Modulationssignals proportionalen Korrelationssignalen aufgenommen, wobei eines der Modulationssignale sende- oder empfangsseitig in mehreren Phasenschritten phasenverschoben wird und für jeden Phasenschritt anhand der Korrelationssignale und anhand dessen ein Pixelgrauwert unabhängig von Störsignalen bestimmt werden.

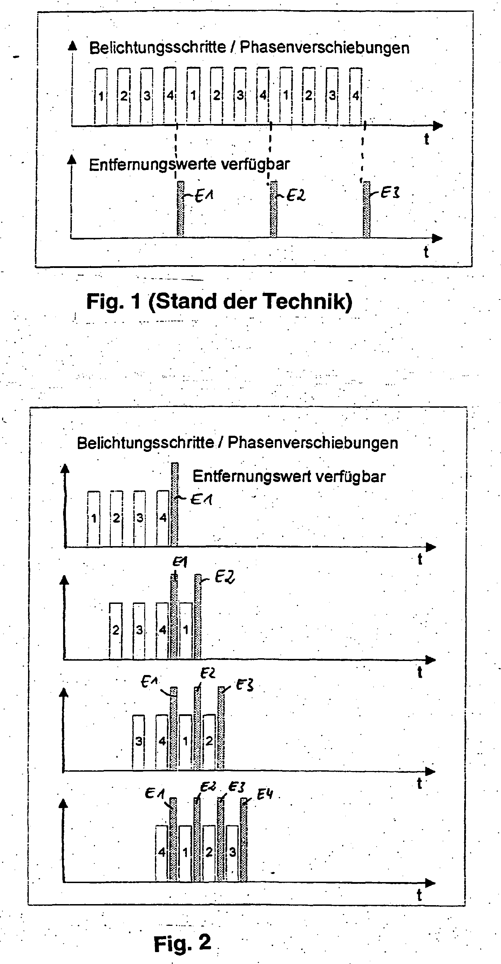

Ein bisher übliches bekanntes Schema zur Aufnahme von Messwerten eines PMD ist aus Fig. 1 bekannt. Dort sind im oberen Diagramm die Anzahl der Belichtungsschritte bzw. die Anzahl der spezifischen Phasenverschiebungen der optischen Sendesignale in zeitlicher Reihenfolge ihrer Aussendung dargestellt. Im darunter liegenden Diagramm sind die Abstandswerte bzw. Entfernungswerte, welche aus den jeweiligen Sendesignalen und den Reflexionssignalen bestimmt werden, gezeigt. In Fig. 1 ist dieses Schema am Beispiel von vier Belichtungsschritten mit jeweils entsprechender Phasenverschiebung des Modulationssignals dargestellt. Die Werte für die unterschiedlichen Phasenverschiebungen der einzelnen optischen Sendesignale sind symbolisch mit den Werten 1, 2, 3 und 4 repräsentiert. Die Darstellung zeigt, dass für eine erste Abstands- bzw. Entfernungsbestimmung vier modulierte optische Sendesignale ausgesandt werden und dann anhand dieser in Verbindung mit den Reflexionssignalen der erste Entfernungswert E1 bestimmt wird. Darauf folgend wird ein zweiter Entfernungswert E2 dadurch bestimmt, dass unabhängig von der ersten Abstandsmessung nochmals vier weitere spezifisch modulierte optische Sendesignale ausgesandt werden und anhand dieser weiteren optischen Sendesignale und den entsprechenden Reflexionssignalen dieser Entfernungswert E2 bestimmt wird. Analog dazu wird dann im Nachfolgenden wiederum ein weiterer Entfernungswert E3 bestimmt. Die Bildwiederholrate ist dadurch relativ gering und insbesondere bei relativ schnell bewegten Objekten kann die Entfernungs- bzw. Abstandsmessung nur sehr unzureichend durchgeführt werden.

Daher ist es Aufgabe der vorliegenden Erfindung, ein Verfahren sowie ein System zur optischen Abstandsmessung zu schaffen, mit dem eine Steigerung der Bildwiederholrate erreicht werden kann.

Diese Aufgabe wird durch ein Verfahren, welches die Merkmale nach Patentanspruch 1 aufweist, und ein System, welches die Merkmale nach Patentanspruch 13 aufweist, gelöst.

Bei einem erfindungsgemäßen Verfahren zur optischen Abstandsmessung zwischen zumindest zwei Objekten, wird durch eine Vorrichtung in einem ersten Objekt eine Anzahl n > 1 von ersten optischen Sendesignalen ausgesendet. Diese ersten optischen Sendesignale werden an dem zweiten Objekt reflektiert und die daraus resultierenden ersten optischen Reflexionssignale können von der Vorrichtung am ersten Objekt empfangen werden. Eine erste Abstandsmessung erfolgt dadurch, dass erste optische Sendesignale und erste optische Reflexionssignale ausgewertet werden. Des Weiteren wird eine weitere Anzahl m, mit 0 < m < n, von zweiten optischen Signalen ausgesendet. Für eine zweite Abstandsmessung werden dann sowohl erste optische Sendesignale sowie erste optische Reflexionssignale als auch zweite optische Sendesignale und durch die Reflexion dieser an dem zweiten Objekt auch zweite optische Reflexionssignale ausgewertet. Für die zweite Abstandsmessung wird dabei eine Anzahl k, mit 0 < k < n, von bei der ersten Abstandsmessung für die Auswertung zugrunde gelegten ersten optischen Signalen und entsprechend ersten optischen Reflexionssignalen herangezogen. Durch diese Vorgehensweise kann eine mehrfache Abstandsmessung präzisiert werden und insbesondere die Bildwiederholrate gesteigert werden. Dies erfolgt insbesondere dadurch, dass für eine weitere Abstandsmessung, welche auf die erste Abstandsmessung folgt, eine kleinere Anzahl von optischen Sendesignalen ausgesendet wird, als dies bei der ersten Abstandsmessung erfolgt. Darüber hinaus kann durch einen zumindest anteiligen Rückgriff auf Sendesignale und Reflexionssignale der ersten Abstandsmessung teilweise auf bekannte Werte zurückgegriffen werden. Durch die deutlich erzielbare Steigerung der Bildwiederholrate kann auch die Abstandsmessung von relativ schnell zueinander bewegten Objekten wesentlich verbessert werden.

Bevorzugt wird für die erste Abstandsmessung die gesamte Anzahl n von ersten optischen Sendesignalen herangezogen. Für die zweite Abstandsmessung wird bevorzugt die gesamte Anzahl m an zweiten optischen Sendesignalen für die Auswertung berücksichtigt.

Bevorzugt wird die Phase der ersten optischen Sendesignale und/oder der zweiten optischen Sendesignale jeweils spezifisch verschoben und/oder die ersten optischen Reflexionssignale und/oder die zweiten optischen Reflexionssignale werden für ein Auswerten des Abstands der beiden Objekte mit jeweils spezifisch phasenverschobenen Modulationssignalen gemischt. Dadurch kann vorgesehen sein, dass beispielsweise für die erste Abstandsmessung die ersten optischen Sendesignale jeweils individuelle Phasenverschiebungen erfahren und dann mit ersten optischen Reflexionssignalen, die mit nicht-phasenverschobenen Modulationssignalen gemischt werden, der Auswertung für die erste Abstandsmessung zugrunde gelegt werden.

Ebenso kann jedoch auch vorgesehen sein, dass die ersten optischen Sendesignale nicht phasenverschoben sind und für eine Auswertung der ersten Abstandsmessung diese ersten optischen Sendesignale und optische Reflexionssignale, die mit einem phasenverschobenen Modulationssignal gemischt werden, zugrunde gelegt werden. In entsprechender Weise kann dies mit den zweiten optischen Sendesignalen und/oder den zweiten optischen Reflexionssignalen für die Bestimmung der zweiten Abstandsmessung erfolgen. In diesem Zusammenhang kann auch vorgesehen sein, dass beispielsweise für die erste Abstandsmessung die ersten optischen Sendesignale spezifisch phasenverschoben werden und die ersten optischen Reflexionssignale mit Modulationssignalen ohne Phasenverschiebung gemischt werden. Im Weiteren kann dann vorgesehen sein, dass für die zweite Auswertung in Bezug auf die zweite Abstandsmessung die zweiten optischen Sendesignale nicht phasenverschoben sind und dafür die zweiten optischen Reflexionssignale mit jeweils spezifisch phasenverschobenen Modulationssignalen gemischt werden. Welche der zugrunde gelegten Signale bei einer entsprechenden Messung eine Phasenverschiebung erfahren, kann dadurch individuell festgelegt werden.

Die Anzahl n von ersten optischen Sendesignalen wird zeitlich nacheinander und die zweiten optischen Sendesignale werden ebenfalls zeitlich nacheinander ausgesendet.

Bevorzugt werden bei einer auf die zweite Abstandsmessung folgenden dritten Abstandsmessung eine Anzahl m von optischen Sendesignalen ausgesendet. Bei dieser Ausgestaltung werden somit bei auf die erste Abstandsmessung folgenden weiteren Abstandsmessungen jeweils die gleiche Anzahl m von optischen Sendesignalen ausgesendet.

Es kann auch vorgesehen sein, dass diese Anzahl von optischen Sendesignalen variiert und beispielsweise bei der zweiten Abstandsmessung eine Anzahl m von optischen Sendesignalen ausgesendet wird und bei einer darauf folgenden dritten Abstandsmessung eine Anzahl 1, mit 1 ≠ m, von optischen Sendesignalen ausgesendet wird. Durch diese Ausgestaltungen kann das Verfahren variabler und flexibler gestaltet werden und zumindest bei zwei weiteren Abstandsmessungen die Anzahl der jeweils ausgesendeten optischen Sendesignale variiert werden. Für weitere Abstandsmessungen kann die Anzahl der jeweils auszusendenden optischen Sendesignale mit alternierender Anzahl erfolgen. Durch diese Flexibilisierung kann die Bildwiederholrate ebenfalls flexibel und variabel gewählt werden. Insbesondere dann, wenn die relative Bewegung zwischen den Objekten relativ schnell ist oder sich diese relative Bewegung zwischen den beiden Objekten relativ schnell und stark ändert, kann auch die Bildwiederholrate für eine exakte Bestimmung dieser Abstandsmessung angepasst und variiert werden. Die Einsatzmöglichkeiten des Verfahrens können dadurch deutlich erhöht und die Abstandsmessung wesentlich präzisiert werden.

Bevorzugt sind die Anzahl m und Anzahl k so aufeinander abgestimmt, dass ihre Addition gleich der Anzahl n entspricht. Ebenso ist kann auch die Summe der Anzahl l und der Anzahl der zumindest zweiten optischen Sendesignale, welche für die Auswertung der dritten Abstandsmessung zugrunde gelegt werden, gleich der Anzahl n. Bei jeder Abstandsmessung wird somit eine jeweils gleiche Anzahl von optischen Sendesignalen zugrunde gelegt. Auch dadurch kann die Kontinuität in der Bestimmung aufrechterhalten werden und eine kontinuierliche Aussage über die Entwicklung des Abstands zwischen den zwei Objekten exakt gegeben werden.

Bevorzugt wird eine Auswertung für eine Abstandsmessung nur dann durchgeführt, wenn die Anzahl der optischen Sendesignale gleich der Anzahl der optischen Reflexionssignale ist. Eine erste Abstandsmessung wird bei dieser Ausgestaltung somit nur dann durchgeführt, wenn sowohl eine Anzahl n von ersten optischen Sendesignalen als auch eine Anzahl n von ersten optischen Reflexionssignalen vorliegen. Ist diese Vorgabe nicht erfüllt, kann bevorzugt vorgesehen sein, dass bei einem Abweichen zwischen den Anzahlen zwischen den optischen Sendesignalen und den optischen Reflexionssignalen nochmals eine Anzahl m von optischen Sendesignalen für eine zweite Abstandsmessung ausgesendet werden. Schlägt somit beispielsweise eine erstmalig durchgeführte zweite Abstandsmessung aufgrund dieser Nichtübereinstimmung der Anzahlen fehl, wird in einem weiteren Versuch zur Bestimmung der zweiten Abstandsmessung nochmals die gleiche Anzahl m von optischen Sendesignalen ausgesendet.

Es kann jedoch auch vorgesehen sein, dass bei einem Abweichen zwischen den Anzahlen zwischen den optischen Sendesignalen und den optischen Reflexionssignalen ein weiterer Versuch so gestaltet wird, dass eine von der Anzahl m abweichende Anzahl i, mit 0 < i < n, von optischen Sendesignalen für eine zweite Abstandsmessung ausgesendet wird. Schlägt daher ein erster Versuch zur Bestimmung einer zweiten Abstandsmessung fehl, wird die Anzahl der ausgesendeten optischen Sendesignale in einem weiteren Versuch zur Bestimmung der zweiten Abstandsmessung variiert. Auch dadurch kann die gesamte Vorgehensweise individualisiert und an entsprechende Umgebungsbedingungen und Situationen angepasst werden und die Flexibilität gesteigert werden.

Bevorzugt ist die Anzahl n > 3, insbesondere 4 oder 8. Dadurch kann eine Anzahl zugrunde gelegt werden, welche im Hinblick auf ein zugrunde gelegtes Sinussignal eine ausreichende und repräsentative Anzahl von Abtastwerten liefert, um eine entsprechende Aussage treffen zu können.

Bevorzugt wird das Verfahren mit einem PMD-System durchgeführt.

Bevorzugt ist das erste Objekt als ein Fahrzeug, insbesondere ein Kraftfahrzeug, ausgeführt, und der Abstand zu einem weiteren Fahrzeug und/oder einem anderen Verkehrsteilnehmer, beispielsweise einem Fußgänger, einem Radfahrer oder einem Motorradfahrer oder dergleichen, und/oder einem Fahrbahnelement, wie beispielsweise einem Randstein oder einer Fahrbahnbegrenzung oder dergleichen, bestimmt. Das Verfahren kann somit bei modernen Fahrerassistenzsystemen eingesetzt werden. Beispielsweise kann hier ein Fahrerassistenzsystem zur Pre-Crash Erkennung oder zur Einparkhilfe oder als ACC-System vorgesehen sein.

Ein erfindungsgemäßes System, insbesondere ein PMD-System, ist zur optischen Abstandsmessung zwischen zumindest zwei Objekten mit einer Vorrichtung in einem ersten Objekt, welche zur Aussendung von optischen Sendesignalen und zum Empfang von Reflexionssignalen ausgebildet ist, ausgebildet. Darüber hinaus ist das System so konzipiert, dass es zur Aussendung einer Anzahl n > 1 von ersten optischen Sendesignalen und zum Empfang von am zweiten Objekt reflektierten und von der Vorrichtung im ersten Objekt empfangenen ersten optischen Reflexionssignalen ausgebildet ist. Dazu kann das System und insbesondere die Vorrichtung entsprechende Sendeeinheiten und Empfangseinheiten aufweisen. Abhängig von ersten optischen Sendesignalen und ersten optischen Reflexionssignalen wird eine erste Abstandsmessung bestimmt. Darüber hinaus ist das System so ausgebildet, dass es zur Aussendung einer weiteren Anzahl m, mit 0 < m < n, von zweiten optischen Sendesignalen ausgebildet ist, wobei für eine zweite Abstandsmessung zweite optische Sendesignale und am zweiten Objekt reflektierte zweite optische Reflexionssignale, sowie eine Anzahl k, mit 0 < k < n, von bei der ersten Abstandsmessung für die Auswertung zugrunde gelegten ersten optischen Sendesignalen und ersten optischen Reflexionssignalen ausgewertet werden. Das System ist insbesondere in einem als Fahrzeug ausgebildeten ersten Objekt angeordnet bzw. diesem zugeordnet. Darüber hinaus kann das System die ausgewerteten Abstandsinformationen an ein zugeordnetes Fahrerassistenzsystem bereitstellen. Durch das vorgeschlagene System kann die Abstandsmessung mit einer deutlich gesteigerten Bildwiederholrate durchgeführt werden und dadurch auch der Abstand zwischen sich relativ schnell bewegenden Objekten präzise bestimmt werden.

Ein Ausführungsbeispiel der Erfindung wird nachfolgend anhand einer schematischen Zeichnung näher erläutert. Es zeigen:
- Fig. 1: eine schematische Darstellung eines aus dem Stand der Technik bekannten Verfahrens; und
- Fig. 2: eine Darstellung eines erfindungsgemäßen Verfahrens.

Im in der Reihenfolge in Fig. 2 oberen Diagramm wird durch ein als PMD-System ausgebildetes Abstandsmessungssystem, welches in einem Fahrzeug angeordnet ist, eine Anzahl n = 4 von ersten optischen Sendesignalen ausgesendet. Durch die Nummerierung 1 bis 4 ist die jeweils spezifische Phasenverschiebung eines optischen Sendesignals gekennzeichnet. Ein im ersten Diagramm gezeigter Entfernungswert bzw. Abstandswert E1 wird in dem PMD-System unter Zugrundelegung aller vier ersten optischen Sendesignale bei einer ersten Abstandsmessung bestimmt. Darüber hinaus werden bei dieser ersten Abstandsmessung für diese Bestimmung des Abstandswerts E1 auch eine Anzahl n = 4 der an dem zweiten Objekt reflektierten modulierten optischen ersten Sendesignale berücksichtigt. Eine erste Abstandsmessung bzw. eine Bestimmung dieses ersten Entfernungswerts E1 erfolgt im Ausführungsbeispiel daher nur dann, wenn die Anzahl n der ersten optischen Sendesignale gleich der Anzahl n = 4 der auch wiederum empfangenen optischen ersten Reflexionssignale entspricht.

Wie im anschließenden darunter liegenden Diagramm dargestellt ist, wird dann für eine nachfolgende weitere zweite Abstandsmessung im Ausführungsbeispiel lediglich ein einziges weiteres zweites optisches Sendesignal ausgesendet, welches eine Phasenverschiebung aufweist, die der Phasenverschiebung des als erstes gesendeten ersten optischen Sendesignals im oberen Diagramm gemäß Fig. 2 entspricht. Bei der zweiten Abstandsmessung und somit bei der Bestimmung des Abstandswerts E2 wird dann wiederum eine Anzahl n = 4 von optischen Sendesignalen zugrunde gelegt, wobei dabei die ersten optischen Sendesignale mit den Phasenlagen 2, 3 und 4 der ersten Abstandsmessung und das eine einzige zweite optische Sendesignal mit der Phasenlage 1 der zweiten Abstandsmessung zugrunde gelegt werden. Darüber hinaus werden die aus der ersten Abstandsmessung bereits bekannten ersten optischen Reflexionssignale zugrunde gelegt und des Weiteren, falls empfangen, das eine einzige zweite optische Reflexionssignal der zweiten Abstandsmessung. Auch hier werden somit jeweils vier optische Sendesignale und vier optische Reflexionssignale für die Auswertung der zweiten Abstandsmessung zugrunde gelegt, wobei lediglich die optischen Sendesignale jeweils individuell phasenverschoben ausgesendet werden.

Der zweite Abstandswert E2 kann somit bereits nach dem Aussenden eines einzigen zweiten optischen Sendesignals bestimmt werden. Die Bildwiederholrate kann dadurch deutlich gesteigert werden.

Des Weiteren wird im Nachfolgenden in einer dritten Abstandsmessung der weitere Abstandswert E3 bestimmt. Auch dazu wird nach der zweiten Abstandsmessung und der Bestimmung des zweiten Abstandswerts E2 lediglich ein einziges weiteres drittes optisches Sendesignal ausgesendet, welches eine spezifische Phasenlage aufweist, die der Phasenlage 2 entspricht. Für die Bestimmung dieses dritten Abstandswerts E3 werden gemäß dem in Fig. 2 dritten Diagramm dann die beiden letzten optischen Sendesignale mit den Phasenlagen 3 und 4 der ersten Abstandsmessung sowie das einzige zweite optische Sendesignal mit der Phasenlage 1 der zweiten Abstandsmessung sowie das einzige dritte optische Sendesignal mit der Phasenlage 2 der dritten Abstandsmessung zugrunde gelegt. Auch hier sind somit eine Anzahl n = 4 von optischen Sendesignalen berücksichtigt. Darüber hinaus werden die jeweils dazu bekannten und empfangenen optischen Reflexionssignale, welche nicht moduliert sind, für die Auswertung herangezogen.

Im unteren Diagramm in Fig. 2 ist in analoger Weise die Bestimmung eines vierten Abstandswerts E4 durch eine vierte Abstandsmessung gezeigt. Auch hier ist nachfolgend zur Bestimmung des dritten Abstandswerts E3 wiederum ein einziges optisches Sendesignal mit der Phasenlage 3 ausgesendet. Wiederum werden für die Bestimmung dieses Abstandswert E4 dann die vier dargestellten optischen Sendesignale sowie die jeweils zugeordneten optischen Reflexionssignale ausgewertet.

Durch das vorgeschlagene Verfahren, welches hier vier Initialmessungen (n=4) umfasst, wird somit nach dem Vorliegen einer grundsätzlichen Anzahl n von gesendeten ersten optischen Sendesignalen, lediglich jeweils nur ein einziger weiterer Belichtungsschritt mit einer Phasenverschiebung durchgeführt, um damit bereits einen neuen weiteren Entfernungswert bzw. Abstandswert bestimmen zu können. Im Ausführungsbeispiel liegt somit gemäß dem oberen Diagramm in Fig. 2 nach vier Initialmessungen ein erster Entfernungswert bzw. Abstandswert E1 vor. Ein weiterer Belichtungsschritt, bei dem die Phasenverschiebung 1 des ersten Belichtungsschrittes eingestellt ist, liefert zusammen mit den letzten drei Belichtungsschritten (Phasenverschiebungen 2, 3, 4) bereits wieder die Voraussetzung für eine Neuberechnung des zugehörigen Abstandswertes E2.

Ein weiterer Belichtungsschritt mit Phasenlage 2 liefert unter Verwendung der letzten drei Belichtungsschritte (Phasenverschiebungen 3, 4, 1) bereits wieder einen weiteren Abstandswert E3, wie dies im dritten Diagramm gemäß Fig. 2 gezeigt ist. Weiteres gilt dann für die Bestimmung des vierten Abstandswerts E4.

Ausgehend von der Bestimmung des ersten Abstandswerts E1 im oberen Diagramm gemäß Fig. 2 kann für die Bestimmung des zweiten Abstandswerts E2 auch vorgesehen sein, dass nicht nur ein einziger weiterer Belichtungsschritt mit einer Phasenlage 1, sondern zusätzlich ein zweiter Belichtungsschritt mit einer Phasenlage 2 und/oder ein dritter Belichtungsschritt mit der Phasenlage 3 erfolgt. Nachfolgend auf die Bestimmung des ersten Abstandswerts E1 würden bei einer derartigen Ausgestaltung dann zumindest zwei oder drei weitere optische Sendesignale mit den jeweiligen Phasenlagen 1, 2 und/oder 3 für eine zweite Abstandsmessung ausgesendet werden. Wesentlich ist, dass die Anzahl m von weiteren ausgesandten optischen Sendesignalen bei der zweiten Abstandsmessung und somit bei der Bestimmung des zweiten Abstandswerts E2 kleiner ist als die Anzahl n der ausgesendeten optischen Sendesignale bei der ersten Abstandsmessung. Bei dieser zweiten Abstandsmessung können somit, wie gezeigt, minimal ein weiterer Belichtungsschritt oder maximal drei weitere Belichtungsschritte durchgeführt werden. Entsprechendes gilt für die Bestimmung der weiteren Abstandswerte E3 und E4. Für die jeweilige Auswertung werden im Ausführungsbeispiel jedoch jeweils eine Anzahl n von optischen Sendesignalen mit verschiedenen Phasenlagen zugrunde gelegt.

Darüber hinaus kann vorgesehen sein, dass ausgehend von den gezeigten Bestimmungen für die Abstandswerte E1 und E2 im dritten Diagramm zur Bestimmung des dritten Abstandswerts E3 nicht nur ein einziges weiteres optisches Sendesignal mit der Phasenlage 2 ausgesendet wird, sondern beispielsweise zusätzlich zumindest ein zweites optisches Sendesignal mit der Phasenlage 3 ausgesendet wird. Auch hier kann dann eine Flexibilisierung und Variabilisierung dahingehend erreicht werden, dass dann für die Bestimmung des zweiten Abstandswerts E2 lediglich ein weiterer Belichtungsschritt durchgeführt wird, wohingegen für die Bestimmung des dritten Abstandswerts E3 wieder zumindest zwei Belichtungsschritte und maximal drei Belichtungsschritte durchgeführt werden.

Im Ausführungsbeispiel erfolgt eine Auswertung bei einer Abstandsmessung nur dann, wenn die Anzahl der ausgesendeten optischen Sendesignale gleich der Anzahl der empfangenen optischen Reflexionssignale ist.

Prinzipiell kann auch vorgesehen sein, dass die Anzahl n von Sendesignalen und die Anzahl n von Reflexionssignalen, welche jeweils einer Auswertung für eine Abstandsmessung zugrunde gelegt wird, variieren. Es kann vorgesehen sein, dass beispielsweise für eine Auswertung für die ersten beiden Abstandswerte E1 und E2 jeweils vier Sendesignale und vier Reflexionssignale gemäß den Ausführungen in den beiden oberen Diagrammen in Fig. 2 zugrunde gelegt werden. Für die Auswertung des dritten Abstandswerts E3 und/oder des vierten Abstandswerts E4 können dann jeweils beispielsweise acht Sendesignale und acht Reflexionssignale und somit quasi acht anstatt vier Belichtungsschritte zugrunde gelegt werden. Beispielsweise werden dann die Sendesignale mit spezifischen Phasenlagen 1 bis 8 ausgeführt.

## Patentansprüche

1. Verfahren zur optischen Abstandsmessung zwischen zumindest zwei Objekten, bei dem durch eine Vorrichtung in einem ersten Objekt eine Anzahl n >1 von ersten optischen Sendesignalen (1 bis 4) ausgesendet wird, und am zweiten Objekt reflektierte und von der Vorrichtung im ersten Objekt empfangene erste optische Reflexionssignale sowie die ersten optischen Sendesignale (1 bis 4) für eine erste Abstandsmessung (E1) ausgewertet werden,
**dadurch gekennzeichnet, dass**
eine weitere Anzahl m, mit 0<m<n, von zweiten optischen Sendesignalen (1 bis 3) ausgesendet wird und für eine zweite Abstandsmessung (E2) die zweiten optischen Sendesignale (1 bis 3) und am zweiten Objekt reflektierte zweite optische Reflexionssignale, sowie eine Anzahl k, mit 0<k<n, von bei der ersten Abstandsmessung (E1) für die Auswertung zugrunde gelegten ersten optischen Sendesignalen (1 bis 4) und ersten optischen Reflexionssignalen ausgewertet werden, wobei die ersten optischen Sendesignale (1 bis 4) und die zweiten optischen Sendesignale (1 bis 3) amplitudenmoduliert und ieweils spezifisch phasenverschoben werden.

2. Verfahren nach Anspruch 1,
**dadurch gekennzeichnet, dass** die ersten optischen Reflexionssignale (1 bis 4) und/oder die zweiten optischen Reflexionssignale (1 bis 3) mit amplitudenmodulierten Signalen gemischt werden, welche Mischsignale jeweils spezifisch phasenverschoben werden.

3. Verfahren nach Anspruch 1 oder 2,
**dadurch gekennzeichnet, dass**
die Anzahl n von ersten optischen Sendesignalen (1 bis 4) zeitlich nacheinander und die Anzahl m von zweiten optischen Sendesignalen (1 bis 3) zeitlich nacheinander ausgesendet werden.

4. Verfahren nach einem der vorhergehenden Ansprüche,
**dadurch gekennzeichnet, dass**
bei einer auf die zweite Abstandsmessung (E2) folgenden dritten Abstandsmessung (E3) eine Anzahl m von optischen Sendesignalen (1 bis 3) ausgesendet werden.

5. Verfahren nach einem der vorhergehenden Ansprüche 1 bis 3,
**dadurch gekennzeichnet, dass**
bei einer auf die zweite Abstandsmessung (E2) folgenden dritten Abstandsmessung (E3) eine Anzahl I, mit I ungleich m, von optischen Sendesignalen (1 bis 3) ausgesendet werden.

6. Verfahren nach einem der vorhergehenden Ansprüche,
**dadurch gekennzeichnet, dass**
die Anzahl m plus die Anzahl k gleich der Anzahl n ist.

7. Verfahren nach einem der vorhergehenden Ansprüche,
**dadurch gekennzeichnet, dass**
eine Auswertung für eine Abstandsmessung (E1 bis E4) nur dann durchgeführt wird, wenn die Anzahl der optischen Sendesignale (1 bis 4) gleich der Anzahl der empfangenen optischen Reflexionssignale ist.

8. Verfahren nach Anspruch 7,
**dadurch gekennzeichnet, dass**
bei einem Abweichen zwischen den Anzahlen nochmals eine Anzahl m von optischen Sendesignalen (1 bis 3) für eine zweite Abstandsmessung (E2) ausgesendet werden.

9. Verfahren nach Anspruch 7,
**dadurch gekennzeichnet, dass**
bei einem Abweichen zwischen den Anzahlen nochmals eine von der Anzahl m abweichende Anzahl i, mit 0<i<n, von optischen Sendesignalen (1 bis 3) für eine zweite Abstandsmessung (E2) ausgesendet werden.

10. Verfahren nach einem der vorhergehenden Ansprüche,
**dadurch gekennzeichnet, dass**
die Anzahl n > 3, insbesondere 4 oder 8, ist.

11. Verfahren nach einem der vorhergehenden Ansprüche, welches mit einem PMD-System durchgeführt wird.

12. Verfahren nach einem der vorhergehenden Ansprüche,
**dadurch gekennzeichnet, dass**
das erste Objekt ein Fahrzeug ist und der Abstand zu einem weiteren Fahrzeug und/oder anderen Verkehrsteilnehmern, insbesondere Fußgängern, Radfahrern oder dergleichen, und/oder Fahrbahrielementen, insbesondere Randsteinen, Fahrbahnbegrenzungen und dergleichen, bestimmt wird.

13. System, insbesondere PMD-System, zur optischen Abstandsmessung zwischen zumindest zwei Objekten, mit einer Vorrichtung in einem ersten Objekt, welche zur Aussendung von optischen Sendesignalen (1 bis 4) und zum Empfang von Reflexionssignalen ausgebildet ist, mit welchem eine Anzahl n >1 von ersten optischen Sendesignalen (1 bis 4) ausgesendet wird, und am zweiten Objekt reflektierte und von der Vorrichtung im ersten Objekt empfangene erste optische Reflexionssignale sowie die ersten optischen Sendesignale für eine erste Abstandsmessung (E1) ausgewertet werden,
**dadurch gekennzeichnet, dass**
eine weitere Anzahl m, mit 0<m<n, von zweiten optischen Sendesignalen (1 bis 3) ausgesendet wird und für eine zweite Abstandsmessung (E2) die zweiten optischen Sendesignale (1 bis 3) und am zweiten Objekt reflektierte zweite optische Reflexionssignale, sowie eine Anzahl k, mit 0<k<n, von bei der ersten Abstandsmessung (E1) für die Auswertung zugrunde gelegten ersten optischen Sendesignalen (1 bis 4) und ersten optischen Reflexionssignalen ausgewertet werden, wobei die ersten optischen Sendesignale (1 bis 4) und die zweiten optischen Sendesignalen (1 bis 3) amplitudenmoduliert und jeweils spezifisch phasenverschoben werden.

## Claims

1. Method for optical distance measurement between at least two objects, in which a number n > 1 of first optical transmission signals (1 to 4) is emitted by a device in a first object, and first optical reflection signals reflected at the second object and received by the device in the first object and the first optical transmission signals (1 to 4) are evaluated for a first distance measurement (E1), **characterised in that** a further number m, where 0<m<n, of second optical transmission signals (1 to 3) is emitted and for a second distance measurement (E2) the second optical transmission signals (1 to 3) and second optical reflection signals reflected at the second object and a number k, where 0<k<n, of first optical transmission signals (1 to 4) used as a basis for the evaluation in the first distance measurement (E1) and first optical reflection signals are evaluated, the first optical transmission signals (1 to 4) and the second optical transmission signals (1 to 3) being amplitude-modulated and each specifically phase-shifted.

2. Method according to claim 1, **characterised in that** the first optical reflection signals (1 to 4) and/or the second optical reflection signals (1 to 3) are mixed with amplitude-modulated signals, which mixed signals are each specifically phase-shifted.

3. Method according to either claim 1 or claim 2, **characterised in that** the number n of first optical transmission signals (1 to 4) are sent in succession and the number m of second optical transmission signals (1 to 3) are sent in succession.

4. Method according to any of the preceding claims, **characterised in that**, in a third distance measurement (E3) following the second distance measurement (E2), a number m of optical transmission signals (1 to 3) are emitted.

5. Method according to any of the preceding claims 1 to 3, **characterised in that**, in a third distance measurement (E3) following the second distance measurement (E2), a number I, where I does not equal m, of optical transmission signals (1 to 3) are emitted.

6. Method according to any of the preceding claims, **characterised in that** the number m plus the number k is equal to the number n.

7. Method according to any of the preceding claims, **characterised in that** an evaluation for a distance measurement (E1 to E4) is carried out only when the number of the optical transmission signals (1 to 4) is equal to the number of the received optical reflection signals.

8. Method according to claim 7, **characterised in that**, in the case of a difference between the numbers, a number m of optical transmission signals (1 to 3) are emitted again for a second distance measurement (E2).

9. Method according to claim 7, **characterised in that**, in the case of a difference between the numbers, a number i, which is different from the number m, where 0<i<n, of optical transmission signals (1 to 3) are emitted again for a second distance measurement (E2).

10. Method according to any of the preceding claims, **characterised in that** the number n > 3, in particular is 4 or 8.

11. Method according to any of the preceding claims which is carried out using a PMD system.

12. Method according to any of the preceding claims, **characterised in that** the first object is a vehicle and the distance from a further vehicle and/or other road users, in particular pedestrians, cyclists or the like, and/or other roadway elements, in particular kerbstones, roadway demarcations and the like, is determined.

13. System, in particular a PMD system, for optical distance measurement between at least two objects, comprising a device in a first object, which device is designed to emit optical transmission signals (1 to 4) and to receive reflection signals, by means of which system a number n > 1 of first optical transmission signals (1 to 4) is emitted, and first optical reflection signals reflected at the second object and received by the device in the first object and the first optical transmission signals are evaluated for a first distance measurement (E1), **characterised in that** a further number m, where 0<m<n, of second optical transmission signals (1 to 3) is emitted and for a second distance measurement (E2) the second optical transmission signals (1 to 3) and second optical reflection signals reflected at the second object and a number k, where 0<k<n, of first optical transmission signals (1 to 4) used as a basis for the evaluation in the first distance measurement (E1) and first optical reflection signals are evaluated, the first optical transmission signals (1 to 4) and the second optical transmission signals (1 to 3) being amplitude-modulated and each specifically phase-shifted.

## Revendications

1. Procédé de mesure optique de distance entre au moins deux objets, selon lequel un dispositif dans un premier objet émet un certain nombre n > 1 de premiers signaux optiques d'émission (1 à 4) et selon lequel on évalue pour une première mesure de distance (E1) des premiers signaux optiques de réflexion réfléchis par le deuxième objet et reçus par le dispositif dans le premier objet ainsi que les premiers signaux optiques d'émission (1 à 4),
**caractérisé en ce que** l'on émet un autre nombre m, avec 0 < m < n, de deuxièmes signaux optiques d'émission (1 à 3) et **en ce que** l'on évalue pour une deuxième mesure de distance (E2) les deuxièmes signaux optiques d'émission (1 à 3) et des deuxièmes signaux optiques de réflexion réfléchis par le deuxième objet ainsi qu'un certain nombre k, avec 0 < k < n, de premiers signaux optiques d'émission (1 à 4) à la base de l'évaluation lors de la première mesure de distance (E1) et des premiers signaux optiques de réflexion, les premiers signaux optiques d'émission (1 à 4) et les deuxièmes signaux optiques d'émission (1 à 3) étant modulés en amplitude et à chaque fois déphasés spécifiquement.

2. Procédé selon la revendication 1, **caractérisé en ce que** l'on mélange les premiers signaux optiques de réflexion (1 à 4) et/ou les deuxièmes signaux optiques de réflexion (1 à 3) à des signaux modulés en amplitude, lesquels signaux mélangés sont à chaque fois déphasés de manière spécifique.

3. Procédé selon la revendication 1 ou 2, **caractérisé en ce que** l'on émet temporellement les uns après les autres le nombre n de premiers signaux optiques d'émission (1 à 4) et **en ce que** l'on émet temporellement les uns après les autres le nombre m de deuxièmes signaux optiques d'émission (1 à 3).

4. Procédé selon l'une des revendications précédentes, **caractérisé en ce que**, lors d'une troisième mesure de distance (E3) qui fait suite à la deuxième mesure de distance (E2), on émet un nombre m de signaux optiques d'émission (1 à 3).

5. Procédé selon l'une des revendications précédentes 1 à 3, **caractérisé en ce que**, lors d'une troisième mesure de distance (E3) qui fait suite à la deuxième mesure de distance (E2), on émet un nombre 1, avec 1 ≠ m, de signaux optiques d'émission (1 à 3).

6. Procédé selon l'une des revendications précédentes, **caractérisé en ce que** le nombre n est égal au nombre m plus le nombre k.

7. Procédé selon l'une des revendications précédentes, **caractérisé en ce que** l'on n'effectue une évaluation pour une mesure de distance (E1 à E4) que si le nombre des signaux optiques d'émission (1 à 4) est égal au nombre des signaux optiques de réflexion reçus.

8. Procédé selon la revendication 7, **caractérisé en ce que**, en cas d'écart entre les nombres, on émet encore une fois un nombre m de signaux optiques d'émission (1 à 3) pour une deuxième mesure de distance (E2).

9. Procédé selon la revendication 7, **caractérisé en ce que**, en cas d'écart entre les nombres, on émet encore une fois un nombre i, avec 0 < i < n et différent du nombre m, de signaux optiques d'émission (1 à 3) pour une deuxième mesure de distance (E2).

10. Procédé selon l'une des revendications précédentes, **caractérisé en ce que** le nombre n est > 3, notamment 4 ou 8.

11. Procédé selon l'une des revendications précédentes, qui est mis en oeuvre avec un système PMD (Photonic Mixer Device).

12. Procédé selon l'une des revendications précédentes, **caractérisé en ce que** le premier objet est un véhicule automobile et **en ce que** l'on détermine la distance à un autre véhicule automobile et/ou à d'autres usagers de la route, notamment à des piétons, à des cyclistes ou autres, et/ou à des éléments de la chaussée, notamment à des bordures de trottoirs, à des limites de chaussée et autres.

13. Système, notamment système PMD (Photonic Mixer Device), pour la mesure optique de distance entre au moins deux objets, avec dans un premier objet un dispositif qui est conçu pour émettre des signaux optiques d'émission (1 à 4) et pour recevoir des signaux de réflexion, système avec lequel un certain nombre n > 1 de premiers signaux optiques d'émission (1 à 4) sont émis et avec lequel des premiers signaux optiques de réflexion réfléchis par le deuxième objet et reçus par le dispositif dans le premier objet ainsi que les premiers signaux optiques d'émission sont évalués pour une première mesure de distance (E1),
**caractérisé en ce qu'**un autre nombre m, avec 0 < m < n, de deuxièmes signaux optiques d'émission (1 à 3) sont émis et **en ce que** les deuxièmes signaux optiques d'émission (1 à 3) et des deuxièmes signaux optiques de réflexion réfléchis par le deuxième objet ainsi qu'un certain nombre k, avec 0 < k < n, de premiers signaux optiques d'émission (1 à 4) à la base de l'évaluation lors de la première mesure de distance (E1) et des premiers signaux optiques de réflexion sont évalués pour une deuxième mesure de distance (E2), les premiers signaux optiques d'émission (1 à 4) et les deuxièmes signaux optiques d'émission (1 à 3) étant modulés en amplitude et à chaque fois déphasés de manière spécifique.
